# EUROPEAN PATENT APPLICATION

(11) **EP 2 299 727 A1**
(43) Date of publication of application: **23.03.2011**
(21) Application number: 09170778.6
(22) Date of filing: 19.09.2009
(51) Int. Cl.: H04N 13/00

(54) **System and method for controlling shutter glasses**

(71) Applicant: Advanced Digital Broadcast S.A., 1292 Chambesy (CH)
(72) Inventor: Paczkowski, Jacek, 40-111, Katowice (PL)
(74) Representative: Pawlowski, Adam

(57) **Abstract**

A method for controlling shutter glasses in synchronization with a video signal, comprising the steps of receiving a shutter glasses driving signal, the signal indicating the opening and closing time of shutter glasses, receiving a L/R side selection signal, the signal indicating the left or the right eye for which the a video frame of the video signal is displayed, opening or closing the left of right shutter glass according to the value of shutter glasses driving signal and the L/R side selection signal, wherein the method further comprises the steps of monitoring a screen programming signal at a display unit on which the video signal is to be displayed and processing the screen programming signal to generate the shutter glasses driving signal.

## Description

The invention relates to a system and a method for controlling shutter glasses used for viewing stereoscopic images.

The most popular type of shutter glasses is liquid crystal display (LCD) shutter glasses. The left and right glasses are alternately darkened in synchronization with the display on an external display of frames for left and right eye. When the operation is repeated with high frequency, i.e. above 50Hz, this creates a three-dimensional experience for the user.

A common problem related to shutter glasses is the proper time synchronization of the darkening of glasses and display of frames on the external display.

A US patent US5796373 discloses a computerized stereoscopic image system comprising LCD shutter glasses, a VGA card for generating an analog RGB signal, a monitor for displaying the analog RGB signal and a shutter synchronizer, the synchronizer receiving a signal from the VGA card and generating a signal driving the shutter glasses. The drawback of this solution is that the shutter synchronizer does not take into account delays introduced by the monitor to display the RGB signal, therefore the opening and closing times of the shutter glasses are not exactly synchronized with the display times of individual video frames.

A US patent US6678091 discloses a system for synchronizing shutter glasses with a sequence of images, comprising synchronization means detecting at least one synchronization image displayed on display. The system is capable of efficient synchronization, but it requires additional circuitry to generate the synchronization images.

The object of the invention is to improve the existing shutter glasses synchronization systems so as to achieve a more exact synchronization with the displayed signal.

The object of the invention is a method for controlling shutter glasses in synchronization with a video signal, comprising the steps of receiving a shutter glasses driving signal, the signal indicating the opening and closing time of shutter glasses, receiving a L/R side selection signal, the signal indicating the left or the right eye for which the a video frame of the video signal is displayed, opening or closing the left of right shutter glass according to the value of shutter glasses driving signal and the L/R side selection signal, wherein the method further comprises the steps of monitoring a screen programming signal at a display unit on which the video signal is to be displayed and processing the screen programming signal to generate the shutter glasses driving signal.

Preferably, the shutter glasses driving signal is generated as a function of a screen response time and/or a shutter glasses response time.

Preferably, the shutter glasses driving signal defining opening of shutter glasses is generated by delaying the screen programming signal indicating end of screen programming by a difference between a maximum screen response time and shutter glasses opening time. Preferably, the shutter glasses driving signal defining closing of shutter glasses is generated by delaying the screen programming signal indicating start of screen programming by a difference between a minimum screen response time and shutter glasses closing time.

Preferably, the method further comprises the step of receiving the shutter glasses response time from a user.

Preferably, the method further comprises the step of extracting the shutter glasses driving signal and the L/R side selection signal from a combined driving signal. The combined driving signal may comprise two mono combined driving signals.

Another object of the invention is a computer program comprising program code means for performing all the steps of the method according to the invention when said program is run on a computer, as well as a computer readable medium storing computer-executable instructions performing all the steps of the computer-implemented method according to the invention when executed on a computer.

A further object of the invention is a system for controlling shutter glasses, comprising a shutter glasses controller configured to receive a shutter glasses driving signal, the signal indicating the opening and closing time of shutter glasses, receive a L/R side selection signal, the signal indicating the left or the right eye for which the a video frame of the video signal is displayed at a display unit and open or close the left of right shutter glass according to the value of shutter glasses driving signal and the L/R side selection signal, wherein the system further comprises a screen activity monitor configured to monitor a screen programming signal at a display unit on which the video signal is to be displayed and a delay controller configured to process the screen programming signal to generate the shutter glasses driving signal.

Preferably, the delay controller is configured to generate the shutter glasses driving signal is as a function of a screen response time and/or a shutter glasses response time.

Preferably, the system further comprises a source of parameters configured to store the screen response time and/or the shutter glasses response time. Preferably, the source of parameters is configured to receive the value of the screen response time and/or the shutter glasses response time from a user.

Preferably the screen activity monitor and the delay controller are embedded in the display unit.

Preferably, the display unit is an LCD display and the screen programming signal is the signal transmitted via an LCD matrix control line.

These and other objects of the invention presented herein are accomplished by providing an improved system and method for controlling shutter glasses. Further details and features of the invention, its nature and various advantages will become more apparent from the following detailed description of the preferred embodiments shown in a drawing, in which:
FIG. 1 presents a display unit and shutter glasses with the system for controlling shutter glasses according to the invention;
FIG. 2 shows waveforms of signals processed in the system; and
FIG. 3 shows a procedure for controlling shutter glasses.

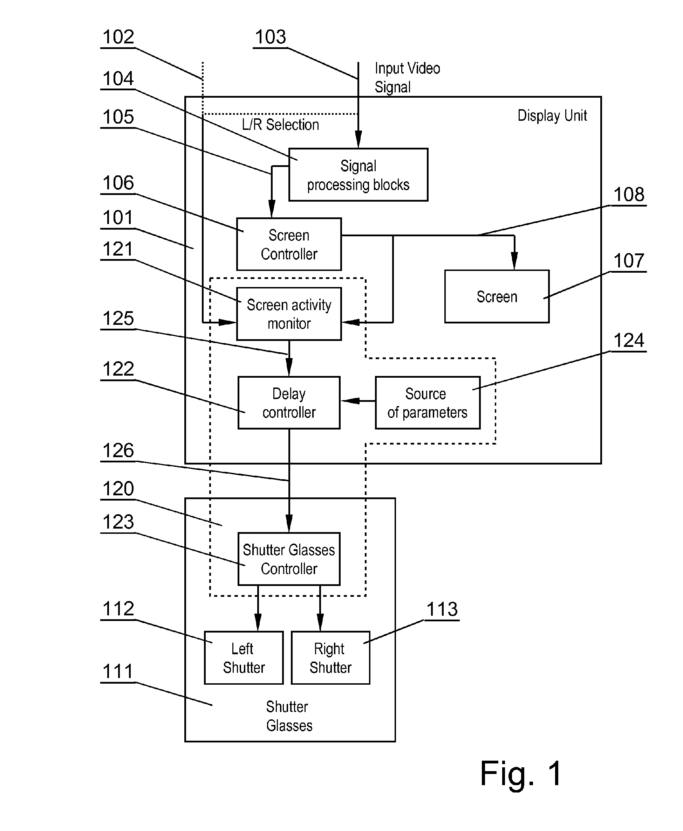

Fig. 1 presents a preferred embodiment of a system for controlling shutter glasses according to the invention. A stereoscopic input video signal 103 is received at a display unit 101, for example an LCD display. A left eye/right eye (L/R) selection signal may be comprised within the stereoscopic video signal 103 or may be transmitted as an independent L/R selection signal 102. Most display units 101 comprise a number of signal-processing blocks 104 for adapting the signal to be displayed 105 to meet the user's needs, such as buffering, interpolation, refresh rate and quality enhancements, such as brightness and contrast control or signal sharpening. These signal-processing blocks 104 introduce delays for each frame to be displayed, the delay being usually dependent on the contents of the frame, i.e. the amount, contents and complexity of data to be processed. Therefore, each frame, to be displayed 105, is delayed, by different television sets, by a variable amount of time with respect to the frame position in the stereoscopic video signal 103. That delay may be different in various display units 101 depending on the configuration of signal processing blocks. The signal to be displayed 105, output from the signal processing blocks 104, is passed to a screen controller 106, which programs the screen 107, for example an LCD or plasma matrix.

A screen activity monitor 121 monitors the screen programming signal 108 which drives the screen 107, for example the LCD matrix, of the display 101. The screen programming signal 108 comprises data which directly cause change of state of the display and is preferably not subject to any further image-processing algorithms. Since the screen programming signal 108 is not subject to any further signal processing operations, it is perfectly synchronized with the video frames actually displayed on the screen 107. For example, in case of an LCD display, the screen programming signal 108 may be a display matrix control line, which directly drives the LCD matrix. Preferably, the screen programming signal 108 is monitored at a point close to the programmed screen, so as to eliminate possible delays and/or distortions on the signal path caused by amplifiers, buffers and other circuits. In case of LCD matrix programming signal, the period in which matrix programming data is sent is shorter than the total duration of a single frame.

The screen activity monitor thus outputs preferably a binary programming activity signal 125 defining the active programming period of the programming activity signal 125, in other words the programming activity or inactivity of the screen controller 106. The programming activity signal 125 may furthermore comprise data on the type of frame being currently displayed, i.e. whether it is a left or right-eye frame from the L/R selection signal. Alternately, the L/R selection signal may be transmitted directly to the shutter glasses 111.

A delay controller 122 generates a shutter glasses driving signal 126 for driving the shutter glasses controller 123, allowing precise timing of the shutter open and close times. The delay controller 122 is supplied, from a parameters source 124, with timing parameters such as screen maximum and minimum response time, defining the duration necessary for the screen to display the data contained in the screen programming signal. Minimum screen response time corresponds to a situation when only small, detectable by typical viewers eyes, changes of pixels are to be displayed on the screen, and maximum screen response time corresponds to a situation when the screen changes color from black to white. Another type of timing parameters provided by the parameters source 124 is the shutter glasses opening and closing time. Usually the shutter glasses are faster than television display panels and react within 1 or 2 ms. Alternatively, if the opening and closing time of the shutters are substantially equal, a single value defining shutter glasses response time may be provided.

The parameters may be programmed by the system provider or set by the user while setting up the system according to the invention. This allows the system to operate with shutter glasses of different response times.

The delay controller 122 takes into account the timing parameters to generate the shutter glasses driving signal 126. The shutter glasses driving signal 126 and the L/R selection signal 102 may be transmitted separately to the shutter glasses controller, or may be combined into a combined driving signal. The combined driving signal may be a digital signal, an analog signal or a PWM signal.

For example, a PWM signal may be generated, wherein a pulse width of 25% may indicate closing of the left shutter, a a pulse width of 75% may indicate closing of the right shutter and a a pulse width of 50% may indicate closing of both shutters, and lack of signal may indicate opening of both shutters.

Furthermore, the combined driving signal may be sent as a stereo signal, i.e. transmitting information on opening and closing times for both the left and right shutters, or as two mono signals, i.e. one signal transmitting information on opening and closing times for the left shutter and the second signal transmitting information on opening and closing times for the right shutter.

The shutter glasses driving signal 126 may be sent to the shutter glasses controller 123 via a dedicated wire connection or wirelessly.

The screen activity monitor 121, the delay controller 122, the shutter glasses controller 123 and the parameters source 124 form the system 120 for controlling shutter glasses according to the invention. The distribution of system elements between the display unit and the shutter glasses as shown in Fig. 1 represents an exemplary embodiment. Other locations of the system elements are possible, within the display unit and the shutter glasses, as well as other devices, such as an external shutter glasses controller.

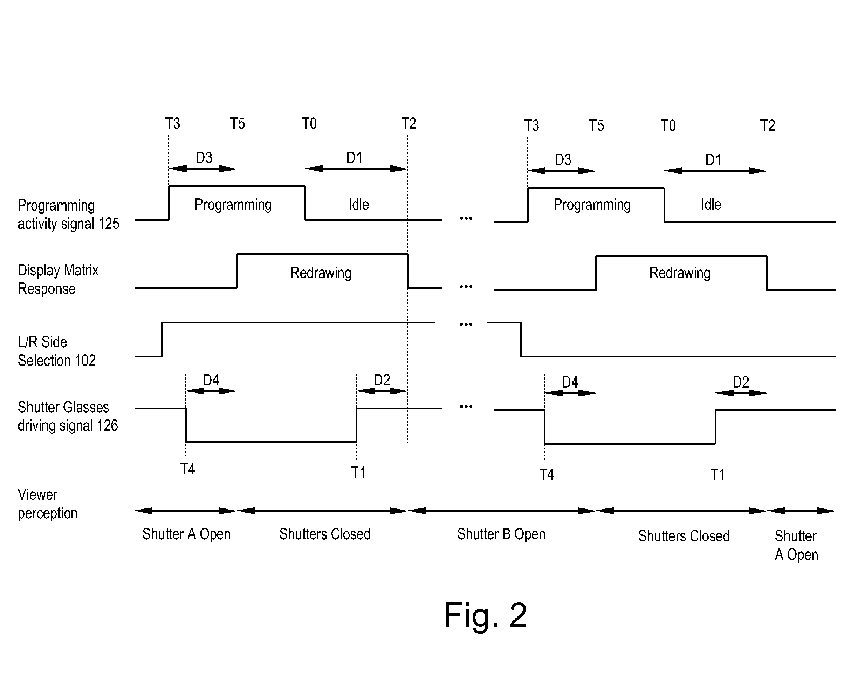

FIG. 2 shows plots of signals processed in the system. The programming activity signal 125 identifies when activity on the display matrix programming lines is present. In another embodiment this may only be a signal indicating end of such activity on display matrix lines. The display matrix response plot defines the actual appearance of the new data on the screen. The L/R side selection signal 102 defines in a binary form whether the currently displayed frame is to be viewed by the left or by the right eye of the user. The shutter glasses driving signal 126 controls the shutter glasses controller and indicates shutter glasses opening and closing times. The viewer perception plot indicates the actual state of the shutter glasses perceived by the user.

When the screen, for example an LCD matrix is programmed, it starts refreshing. The refreshing typically starts before display matrix programming end. Commonly display matrix is programmed and refreshes from bottom to top of the display. Therefore some redrawing may take place while still programming the display matrix. Therefore, the display matrix response plot is shifted with respect to the programming activity signal 125.

The L/R side selection signal 102 may precede the programming activity signal, as it is synchronous with the video input signal 103. The programming activity signal 125 is variably delayed with respect to the video input signal 103 by a delay dependent on the operations performed by the signal processing blocks 104. However, since the L/R side selection signal is analyzed by the shutter glasses controller only at the time of switch of shutters, the signal always defines a proper shutter to be opened or closed.

The shutter glasses driving signal 126 is generated on the basis of the programming activity signal by taking into account timing parameters from the parameters source 124, such as opening and closing time of shutters and response time of the matrix. In one embodiment, a "1" value indicates that a shutter corresponding to the L/R selection signal should be opened, and a "0" value indicates that the shutter should be closed. The "1" signal is generated at a moment T1, preceding the end of redrawing of the matrix T2 by duration D2, equal to the shutter glasses opening time. The "0" signal is generated at a moment T4, preceding the start of redrawing of the matrix T5 by duration D4, equal to the shutter glasses closing time. Owing to such an arrangement the time when shutter glasses are opened is maximized. The shutter to be opened or closed is selected by the L/R side selection signal according to its value at a time of triggering opening of a shutter. The closing time is side independent since it is desirable to have both shutters closed at frame refreshing times.

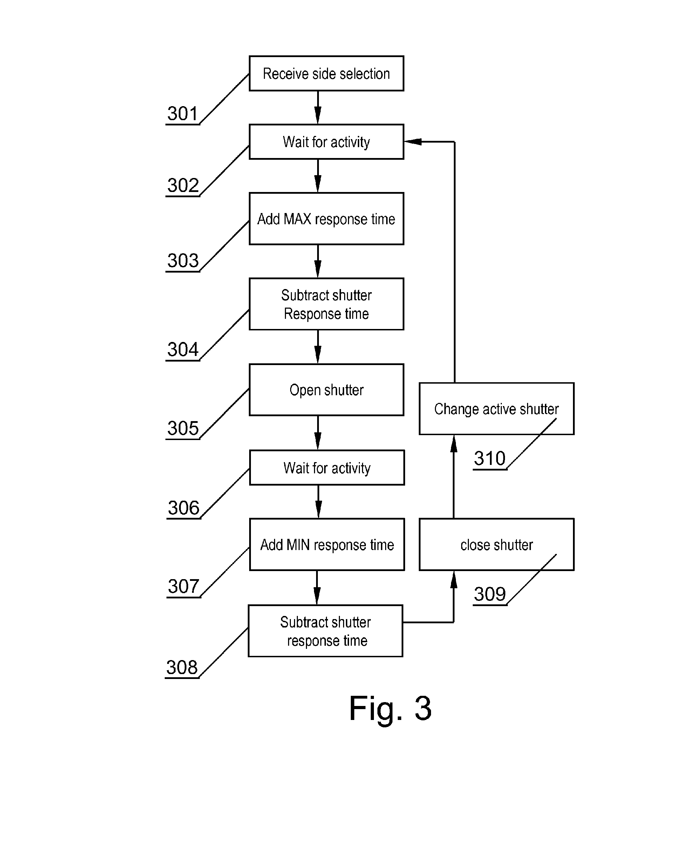

FIG. 3 shows a procedure for controlling the shutter glasses. The procedure can be split into two stages the first stage involving opening a shutter glass and the second stage involving closing a shutter glass. At step 301 the system starts monitoring the L/R side selection signal 102. The L/R side selection signal is monitored in the delay controller 122 or in the shutter glasses controller 123, depending on the system design and the point at which the signal 102 is received. In step 302 the delay controller 122 awaits indication of activity in the programming activity signal 125. In step 303 a maximum response time of the screen is read from the parameters source to allow only fully refreshed frame to be visible. A shutter shall open later than activity on screen ends. The delay is preferably maximum screen response time required to change colour from black to white or similar far colours. In step 304 the shutter opening response time is read from the parameters source. It is assumed that shutter glasses response times are lower than screen response times. Since the shutter opens with a delay, a shutter opening trigger may be issued before the screen redrawing process finishes. Therefore, the time T1 at which a shutter glasses driving signal 126 indicating shutter opening is generated is calculated by adding a maximum screen response time D1 to the time T0 at which the activity in the programming activity signal ends and subtracting the shutter opening delay D2. For example, if activity in the programming activity signal 125 is present between T3=10^{th} millisecond and T0=14^{th} millisecond, refreshing starts nearly immediately and ends at T2=25^{th} millisecond which takes into account a 11 millisecond maximum response time D1. Assuming a shutter opening delay D2 of 2 milliseconds, a shutter opening signal may be generated at T1=23^{rd} millisecond.

Both aforementioned delays namely screen maximum response time and shutter opening delay may be set in a user options panel in order to allow for generating settings that will adapt to viewer's needs.

The shutter glasses driving signal and the L/R side selection signal are read by the shutter glasses controller. In case the combined driving signal is transmitted, the shutter glasses controller extracts the shutter glasses driving signal and the L/R side selection signal from the combined driving signal.

A shutter is opened by shutter glasses controller 123 accordingly in step 305. One of the shutters may be selected based on L/R side selection signal 102 present at a time of shutter-open state on the shutter glasses driving signal. Since the shutter is opened with a delay D2, the user perceives the opening of the shutter exactly at a time when the display unit screen finishes redrawing of the video frame.

When the shutter is opened, the method awaits in step 306 for further activity on the programming activity signal In step 307 a minimum response time D3 of the screen is taken into account to allow only fully refreshed frame to be visible and not show to any refreshing. A shutter shall close later than activity on display control matrix starts. The delay D3 is preferably minimum screen response time required to change colour to a similar colour distinguishable by human eye.

In step 308 the shutter closing response time D4 is subtracted from the time T5 at which redrawing starts. It is assumed that shutter glasses response times are lower that screen response time. The shutter closing time D4 may be slightly shorter than shutter opening time D2. Nevertheless usually this difference cannot be detected by a human eye. Hence shutter opening response time D2 and shutter closing response time D4 may be commonly defined as shutter glasses response time and preferably be equal.

Since a shutter closing delay is present a closing trigger may be issued before the screen redrawing process starts. Therefore, the time T4 at which a shutter glasses driving signal 126 indicating shutter closing is generated is calculated by adding a minimum screen response time D3 to the time T3 at which the activity in the programming activity signal starts and subtracting the shutter closing delay D4. For example if activity on screen control lines is present between T3=10^{th} millisecond and T0=14^{th} millisecond, refreshing starts nearly immediately at T5=12^{th} millisecond and ends at T2=25^{th} millisecond which takes into account a 2 millisecond minimum response time D3. Assuming a shutter closing delay D4 of 1,5 millisecond a shutter closing signal may be sent on T4=10,5^{th} millisecond.

A shutter closing time is irrespective of shutter selection. A closing signal means that both shutters shall be closed since refreshing period is about to start.

Both aforementioned delays namely screen minimum response time and shutter closing delay may be set in a user options panel in order to allow for generating settings that will adapt to viewer's needs and shutter glasses used. Screen response times may be programmed by a manufacturer of display or shutter glasses controller.

It can be easily recognised, by one skilled in the art, that the aforementioned system and method for controlling shutter glasses may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

The present invention may be implemented using any display, for example on computer monitor, a television display, a mobile phone, PDA, or a laptop computer.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for controlling shutter glasses in synchronization with a video signal, comprising the steps of
- receiving a shutter glasses driving signal, the signal indicating the opening and closing time of shutter glasses,
- receiving a L/R side selection signal, the signal indicating the left or the right eye for which the a video frame of the video signal is displayed,
- opening or closing the left of right shutter glass according to the value of
shutter glasses driving signal and the L/R side selection signal, **characterized in that** it further comprises the steps of
- monitoring a screen programming signal at a display unit on which the video signal is to be displayed, and
- processing the screen programming signal to generate the shutter glasses driving signal.

2. The method according to claim 1, **characterized in that** the shutter glasses driving signal is generated as a function of a screen response time and/or a shutter glasses response time.

3. The method according to claim 2, **characterized in that** the shutter glasses driving signal defining opening of shutter glasses is generated by delaying the screen programming signal indicating end of screen programming (T0) by a difference between a maximum screen response time (D1) and shutter glasses opening time (D2).

4. The method according to claim 2, **characterized in that** the shutter glasses driving signal defining closing of shutter glasses is generated by delaying the screen programming signal indicating start of screen programming (T3) by a difference between a minimum screen response time (D3) and shutter glasses closing time (D4).

5. The method according to claim 2, further comprising the step of receiving the shutter glasses response time from a user.

6. The method according to claim 1, comprising the step of extracting the shutter glasses driving signal and the L/R side selection signal from a combined driving signal.

7. The method according to claim 1, wherein the combined driving signal comprises two mono combined driving signals.

8. A computer program comprising program code means for performing all the steps of the method as claimed in any of claims 1 to 7 when said program is run on a computer.

9. A computer readable medium storing computer-executable instructions performing all the steps of the computer-implemented method according to any of claims 1 to 7 when executed on a computer.

10. A system for controlling shutter glasses, comprising a shutter glasses controller (123) configured to receive a shutter glasses driving signal, the signal indicating the opening and closing time of shutter glasses (111), receive a L/R side selection signal, the signal indicating the left or the right eye for which the a video frame of the video signal is displayed at a display unit (101) and open or close the left (112) of right (113) shutter glass according to the value of shutter glasses driving signal and the L/R side selection signal,
**characterized in that** it further comprises
- a screen activity monitor (121) configured to monitor a screen programming signal at a display unit on which the video signal is to be displayed, and
- a delay controller (122) configured to process the screen programming signal to generate the shutter glasses driving signal.

11. The system according to claim 10, **characterized in that** the delay controller (122) is configured to generate the shutter glasses driving signal is as a function of a screen response time and/or a shutter glasses response time.

12. The system according to claim 11, **characterized in that** it further comprises a source of parameters (124) configured to store the screen response time and/or the shutter glasses response time.

13. The system according to claim 12, **characterized in that** the source of parameters (124) is configured to receive the value of the screen response time and/or the shutter glasses response time from a user.

14. The system according to claim 10 or 11, **characterized in that** the screen activity monitor (122) and the delay controller (123) are embedded in the display unit (101).

15. The system according to any of claims 10 to 14, **characterized in that** the display unit is an LCD display and the screen programming signal is the signal transmitted via an LCD matrix (107) control line (108).

## Amended claims

### Amended claims in accordance with Rule 137(2) EPC.

**1.** A method for controlling shutter glasses in synchronization with a video signal, comprising the steps of
- receiving a shutter glasses driving signal, the signal indicating the opening and closing time of shutter glasses,
- receiving a L/R side selection signal, the signal indicating the left or the right eye for which the a video frame of the video signal is displayed,
- opening or closing the left of right shutter glass according to the value of shutter glasses driving signal and the L/R side selection signal,
**characterized in that** it further comprises the steps of
- monitoring a screen programming signal at a display unit on which the video signal is to be displayed;
- wherein the display unit comprises a display matrix (107) and the screen programming signal is the signal transmitted via a control line (108) of the display matrix (107); and
- processing the screen programming signal to generate the shutter glasses driving signal.

**2.** The method according to claim 1, **characterized in that** the shutter glasses driving signal is generated as a function of a screen response time and/or a shutter glasses response time.

**3.** The method according to claim 2, **characterized in that** the shutter glasses driving signal defining opening of shutter glasses is generated by delaying the screen programming signal indicating end of screen programming (T0) by a difference between a maximum screen response time (D1) and shutter glasses opening time (D2).

**4.** The method according to claim 2, **characterized in that** the shutter glasses driving signal defining closing of shutter glasses is generated by delaying the screen programming signal indicating start of screen programming (T3) by a difference between a minimum screen response time (D3) and shutter glasses closing time (D4).

**5.** The method according to claim 2, further comprising the step of receiving the shutter glasses response time from a user.

**6.** The method according to claim 1, comprising the step of extracting the shutter glasses driving signal and the L/R side selection signal from a combined driving signal.

**7.** The method according to claim 1, wherein the combined driving signal comprises two mono combined driving signals.

**8.** A computer program comprising program code means for performing all the steps of the method as claimed in any of claims 1 to 7 when said program is run on a computer.

**9.** A computer readable medium storing computer-executable instructions performing all the steps of the computer-implemented method according to any of claims 1 to 7 when executed on a computer.

**10.** A system for controlling shutter glasses, comprising a shutter glasses controller (123) configured to receive a shutter glasses driving signal, the signal indicating the opening and closing time of shutter glasses (111), receive a L/R side selection signal, the signal indicating the left or the right eye for which the a video frame of the video signal is displayed at a display unit (101) and open or close the left (112) of right (113) shutter glass according to the value of shutter glasses driving signal and the L/R side selection signal,
**characterized in that** it further comprises
- a screen activity monitor (121) configured to monitor a screen programming signal at a display unit on which the video signal is to be displayed,
- wherein the display unit (101) comprises a display matrix (107) and the screen programming signal is the signal transmitted via a control line (108) of the display matrix (107); and
- a delay controller (122) configured to process the screen programming signal to generate the shutter glasses driving signal.

**11.** The system according to claim 10, **characterized in that** the delay controller (122) is configured to generate the shutter glasses driving signal is as a function of a screen response time and/or a shutter glasses response time.

**12.** The system according to claim 11, **characterized in that** it further comprises a source of parameters (124) configured to store the screen response time and/or the shutter glasses response time.

**13.** The system according to claim 12, **characterized in that** the source of parameters (124) is configured to receive the value of the screen response time and/or the shutter glasses response time from a user.

**14.** The system according to claim 10 or 11, **characterized in that** the screen activity monitor (122) and the delay controller (123) are embedded in the display unit (101).

**15.** The system according to any of claims 10 to 14, **characterized in that** the display unit is an LCD display and the screen programming signal is the signal transmitted via an LCD matrix (107) control line (108).
